# FASCICULE DE BREVET EUROPEEN

(11) **EP 3 359 369 B1**
(45) Date de publication et mention de la délivrance du brevet: **16.12.2020**
(21) Numéro de dépôt: 16793951.1
(22) Date de dépôt: 07.10.2016
(51) Int. Cl.: B29C 51/20, B29C 51/08, B29C 51/26, B29C 51/30, B29C 51/14

(54) **ENSEMBLE DE THERMOFORMAGE**
THERMOFORMUNGSANORDNUNG
THERMOFORMING ASSEMBLY

(30) Priorité: 07.10.2015 FR 1559542
(43) Date de publication de la demande: 15.08.2018
(73) Titulaire: Centre Technique Des Industries Mecaniques, 60300 Senlis (FR)
(72) Inventeur: BORDELLIER, Franck, 44980 Sainte-Luce-sur-Loire (FR); CALLENS, Clément, 44850 Ligné (FR); DREANO, Elise, 44100 Nantes (FR); EXERTIER, Agnès, 44100 Nantes (FR)
(74) Mandataire: Fédit-Loriot
(86) Numéro de dépôt international: PCT/FR2016/052596
(87) Numéro de publication internationale: WO 2017/060648

(56) Documents cités:
- EP-A1- 1 097 794
- EP-A1- 2 813 339
- DE-A1- 2 718 933
- FR-A1- 2 845 309
- JP-A- S61 258 725

## Description

La présente invention se rapporte à un ensemble de thermoformage permettant de former en relief des matériaux thermoplastiques en plaque pour obtenir des pièces en trois dimensions. De tels ensembles, représentatifs de l'art antérieur sont décrits dans les documents EP1097794A1, FR2845309A1, DE2718933A1, JPS61258725A et EP2813339A1.

Un domaine d'application envisagé est notamment, mais non exclusivement, celui du thermoformage de composite thermoplastique.

Des ensembles de thermoformage connus comprennent deux parties de moule, une partie de moule inférieure comprenant usuellement un poinçon d'une forme prédéfinie en fonction de la pièce à obtenir et une partie de moule supérieure dans laquelle est pratiquée une empreinte apte à coopérer de manière complémentaire avec le poinçon. Lorsque les deux parties de moule sont écartées l'une de l'autre, on vient étendre sensiblement horizontalement entre les deux une plaque de composite thermoplastique à l'état ramolli, dénommée préforme, et que l'on maintien par la bordure. Pour ce faire, la plaque de composite thermoplastique est préalablement chauffée dans un four situé à proximité des deux parties de moule. Ensuite, les deux parties de moule sont entraînées selon un axe sensiblement vertical l'une vers l'autre, tandis que la plaque de composite thermoplastique ramolli est prise en sandwich entre les deux parties de moule. Ainsi, la plaque de composite thermoplastique initialement plane, est alors formée en relief lorsque les deux parties de moule sont engagées l'une dans l'autre. Après refroidissement, on écarte des deux parties de moule l'une de l'autre pour récupérer la pièce rigide ainsi formée.

La plaque de composite thermoplastique ramolli, ou préforme, est maintenue par sa bordure au moyen de pince ou de griffes. Partant, il est nécessaire de prévoir une préforme avec des contours supplémentaires par rapport à la pièce à réaliser de manière à former les bordures. Ces bordures seront alors découpées ensuite pour ne retenir que la pièce fonctionnellement utile. Partant, pour une pièce donnée il est nécessaire de prévoir un surplus de matières non négligeable pour former les bordures.

Aussi, un problème qui se pose et que vise à résoudre la présente invention est de fournir un ensemble de thermoformage qui permette d'obtenir des pièces thermoformées à un coût plus avantageux nécessitant la mise en œuvre de moins de matériau.

Dans le but de résoudre ce problème, il est proposé un ensemble de thermoformage pour former en relief des matériaux thermoplastiques en plaque, ledit ensemble comprenant une partie de moule inférieure et une partie de moule supérieure, les deux parties de moule étant mobiles en translation l'une par rapport à l'autre selon une direction sensiblement verticale entre une position ouverte où lesdites deux parties de moule sont écartées l'une de l'autre et une position fermée où lesdites deux parties de moule sont engagées l'une dans l'autre, ledit ensemble comprenant en outre des organes de maintien pour pouvoir maintenir une plaque de matériau thermoplastique ramolli, selon un plan moyen sensiblement horizontal entre lesdites deux parties de moule. Lesdits organes de maintien comprennent une pluralité de tiges montées mobiles dans ladite partie de moule inférieure, et lesdites tiges viennent s'étendre en saillie de ladite partie de moule inférieure, lorsque lesdites deux parties de moule sont dans ladite position ouverte, pour pouvoir maintenir ladite plaque de matériau thermoplastique ramolli selon ledit plan moyen sensiblement horizontal.

Ainsi, une caractéristique de l'invention réside dans la mise en oeuvre d'une pluralité de tiges montées dans la partie de moule inférieure, lesquelles tiges lorsqu'elles viennent s'étendre en saillie de la partie inférieure de moule, peuvent accueillir et supporter la plaque de matériau thermoplastique ramolli selon un plan moyen sensiblement horizontal. De la sorte, les tiges permettent de supporter la plaque de matériau thermoplastique ramolli sensiblement à plat au-dessus des outillages de la partie inférieure du moule destinés au formage. Partant, il n'est nul besoin de prévoir de bordure supplémentaire à la plaque de matériau thermoplastique ramolli pour la maintenir. On économise ainsi le matériau dédié à cette bordure. Car en effet, grâce aux tiges, qui permettent de venir supporter la préforme depuis l'intérieur du moule, il est possible de réaliser des préformes dont la totalité de la surface est fonctionnellement utile pour la pièce thermoformée. Les tiges permettent de maintenir la préforme dans une position précise donnée, et aussi, permettent à la préforme de conserver sa position durant sa déformation lors de l'engagement des deux parties de moule l'une dans l'autre. Aussi, pour ce faire, les tiges de ladite pluralité de tiges sont sensiblement régulièrement espacées les unes des autres dans ladite partie de moule inférieure. De la sorte, toutes les parties de la plaque de matériau thermoplastique ramollie viennent s'étendre dans le plan moyen horizontal précité. Car en effet, les tiges sont suffisamment rapprochées les unes des autres, et la plaque de matériau thermoplastique ramollie relativement rigides pour éviter qu'elle ne s'étende en formant des bâillements trop prononcés. On observera que la plaque de matériau thermoplastique ramolli peut présenter des parties s'étendant sur deux niveaux différents de chaque côté du plan moyen horizontal et sensiblement parallèles à ce dernier.

Préférentiellement, lesdites tiges mobiles s'étendent sensiblement verticalement de ladite partie de moule inférieure. Elles sont également mobiles en translation selon leur propre axe, et partant, parallèlement à l'axe vertical du mouvement relatif des deux parties de moule. Aussi, lesdites tiges mobiles se rétractent, avantageusement, lorsque lesdites deux parties de moule s'engagent l'une dans l'autre. Ce retrait des tiges mobiles est d'autant plus aisé qu'elles s'étendent parallèlement à l'axe vertical du mouvement relatif des parties de moule.

Selon un mode de mise en œuvre de l'invention particulièrement avantageux, lesdites tiges mobiles présentent chacune une extrémité libre, et lesdites extrémités libres desdites tiges mobiles définissent un plan moyen de réception lorsque lesdites tiges mobiles s'étendent en saillie de ladite partie de moule inférieure. Ainsi, la plaque de matériau thermoplastique ramolli vient précisément s'appuyer sur les extrémités libres des tiges mobiles lorsque celles-ci viennent s'étendre en saillie de la partie inférieure de moule. De la sorte, chaque extrémité libre forme un point d'appui pour la plaque et l'ensemble des points d'appui définit le plan moyen de réception. Ce plan moyen de réception est sensiblement horizontal en ce sens que la plaque de matériau thermoplastique ramolli peut reposer à l'équilibre sur les extrémités libres des tiges mobiles, avant le rapprochement des deux parties de moule l'une vers l'autre. Aussi, non seulement le plan moyen de réception peut être sensiblement incliné par rapport à l'horizontale et la plaque de demeurer à l'équilibre, mais aussi certaines parties de la plaque peuvent former des creux en bâillant sensiblement, ou bien des bosses ou encore être sensiblement inclinées par rapport aux autres parties de plaque. On qualifiera néanmoins de sensiblement horizontal le plan moyen de réception définit par les extrémités libres de tige.

Un autre avantage, d'ordre thermique, résulte de la mise en œuvre des tiges mobiles. En effet, ces dernières permettent de minimiser la dissipation de l'énergie thermique de la plaque de matériau thermoplastique ramolli quand elles la reçoivent sur leur extrémité libre, car la surface de contact totale est faible. Par conséquent, comparativement à l'art antérieur, il est possible de fournir moins d'énergie thermique à la plaque de matériau thermoplastique, tout en obtenant son parfait formage.

Au surplus, dès lors que les deux parties de moule s'engagent l'une dans l'autre en prenant en sandwich la préforme ramollie, les tiges se rétractent au fur et à mesure du rapprochement des deux parties de moule dans la partie inférieure de moule.

Selon un mode de mise en œuvre de l'invention particulièrement avantageux, lesdites extrémités libres desdites tiges mobiles sont formées en pointe. De la sorte, grâce aux extrémités libres en pointe, la préforme ramollie est parfaitement solidaire des extrémités libres sans risque de mouvements selon le plan de la préforme. De surcroît, la perte d'énergie thermique de la préforme est encore moindre, car les points de contact avec les tiges présentent de plus petites surfaces, et elle demeure ainsi ductile au niveau de ces points de contact.

Selon une caractéristique de l'invention particulièrement avantageuse, ladite partie de moule inférieure présente une embase et une partie mâle s'étendant en saillie de ladite embase. Ainsi, l'embase dont une partie de la paroi constitue le moule présente une partie mâle, ou outillage, et la pluralité de tiges vient essentiellement en saillie de l'embase. Leur extrémité libre est alors susceptible de venir s'étendre au même niveau ou sensiblement au-dessus de l'extremum de la partie mâle. De la sorte, lorsque les tiges s'étendent en saillie de la partie inférieure de moule, la préforme peut alors venir s'étendre à l'affleurement de la partie mâle.

Préférentiellement, lesdites extrémités libres desdites tiges mobiles définissent un plan moyen de réception s'étendant au-dessus de ladite partie mâle. De la sorte, la préforme est maintenue écartée de la partie mâle qui est plus froide, et ainsi, peu d'énergie thermique ne se dissipe avant le formage.

On observera que les tiges mobiles viennent également s'étendre à travers la partie mâle pour pouvoir être régulièrement espacées les unes des autres selon un plan horizontal.

À l'opposé, ladite partie de moule supérieure présente une empreinte, et ladite partie mâle est destinée à venir s'étendre à l'intérieur de ladite empreinte lorsque lesdites deux parties de moule s'engagent l'une dans l'autre. La partie mâle et l'empreinte sont alors dimensionnées de manière à ce que l'espace qui peut séparer respectivement leur paroi, lorsqu'elles sont engagées l'une dans l'autre, correspondent sensiblement à l'épaisseur de la préforme. Bien évidemment, la préforme peut présenter des variations d'épaisseur liées à un nombre de renforts plus important dans certaines zones et conséquemment, dans ces zones correspondantes, les portions de paroi d'empreinte et de partie mâle sont plus éloignées l'une de l'autre.

En outre, l'ensemble de thermoformage selon l'invention comprend un dispositif de chauffage de ladite plaque de matériau thermoplastique, situé près desdites deux parties de moule. De la sorte, on vient chauffer la plaque de matériau thermoplastique à l'intérieur du dispositif de chauffage, de manière à la rendre ductile, par exemple à l'intérieur d'un four dédié à cet effet, pour ensuite la transférer sur les tiges. On chauffe usuellement la plaque de matériau thermoplastique jusqu'à une valeur de température au moins égale à la température de transition vitreuse du polymère thermoplastique qui la constitue.

Aussi, avantageusement, l'ensemble de thermoformage comprend en outre des préhenseurs pour pouvoir transférer ladite plaque de matériau thermoplastique ramolli dudit dispositif de chauffage vers lesdites deux parties de moule. On expliquera plus en détail dans la description qui va suivre le mode de mise en œuvre de ces préhenseurs. Lesquels préhenseurs comprennent avantageusement des aiguilles afin de pouvoir saisir la plaque de matériau thermoplastique ramolli par le dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique montrant selon un plan vertical un élément de l'ensemble de thermoformage selon l'invention ;
- la Figure 2 est une vue schématique montrant selon un plan vertical un autre élément de l'ensemble de thermoformage selon l'invention, dans une première phase de fonctionnement ;
- la Figure 3 est une vue schématique dudit autre élément représenté sur la Figure 2 dans une deuxième phase de fonctionnement ;
- la Figure 4 est une vue schématique dudit autre élément représenté sur la Figure 2 dans une troisième phase de fonctionnement ; et,
- la Figure 5 est une vue schématique dudit autre élément représenté sur la Figure 2 dans une quatrième phase de fonctionnement.

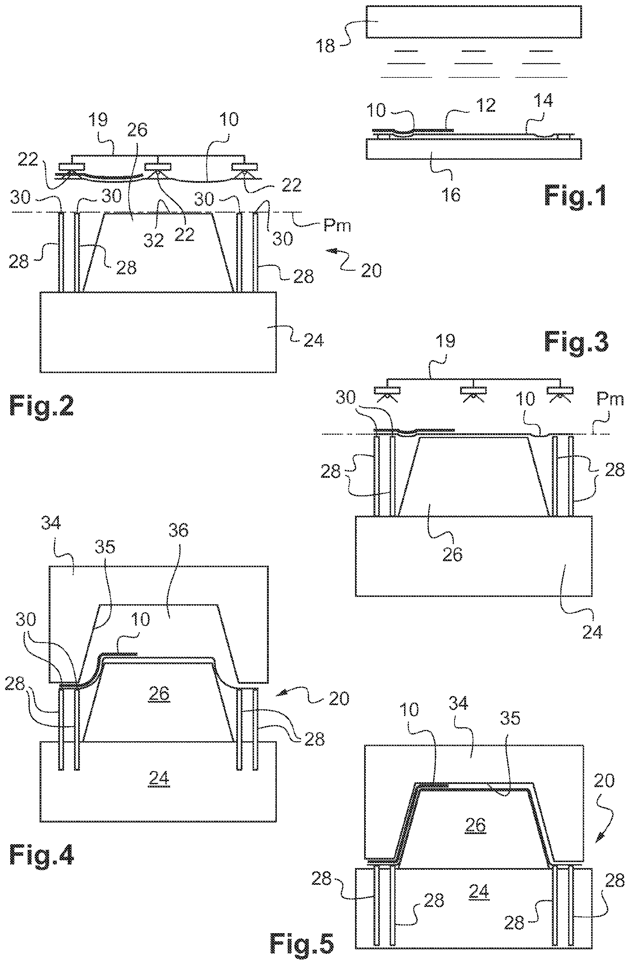

La Figure 1 illustre une préforme 10 faite de plaques de matériau composite thermoplastique 12, 14 superposées partiellement reposant sur un support 16 exposé à des rampes de chauffage 18 à rayonnement infrarouge. Le support 16 comporte selon un mode de mise en œuvre non représenté, des plots d'appui de la préforme 10, de manière à pouvoir réduire la dissipation d'énergie thermique par conduction, reçue par la préforme 10. Un matériau composite thermoplastique est un matériau, ici en plaque, dont la matrice polymère est faite d'un thermoplastique et qui est renforcée par des fibres s'étendant à l'intérieur de ladite matrice. Préférentiellement, le matériau composite en plaque est constitué d'un matériau polymère renforcé par des fibres continues s'étendant longitudinalement au cœur du matériau polymère.

La préforme 10 peut être constituée d'une seule plaque de matériau composite ou bien d'une pluralité de plaques de matériau composite thermoplastique superposées, partiellement ou non, selon un agencement prédéfini en fonction de la nature de la pièce à conformer.

Tout autre type de chauffage permettant d'amener la température du polymère thermoplastique du matériau composite à une valeur sensiblement supérieure à sa température de transition vitreuse, est adapté. Le polymère thermoplastique ramolli est alors ductile et partant, la préforme est rendue malléable.

Après avoir été chauffée, la préforme 10 est alors saisie au moyen d'un préhenseur 19 tel que représenté sur la Figure 2, et où il vient ajuster la préforme 10 ramollie au-dessus d'une partie inférieure 20 de moule de thermoformage. Le préhenseur 19 comporte des jeux d'aiguilles 22, sensiblement inclinées et mobiles en translation dans des sens opposés, pour pouvoir venir s'engager à travers la préforme et la supporter.

Selon un autre mode de mise en œuvre, des cloches à dépression sont aptes à former ventouses. Elles saisissent ainsi la préforme 10 ramollie, par le dessus.

S'agissant de la partie inférieure 20 de moule de thermoformage, elle présente une embase 24 surmontée d'une partie mâle 26 formant noyau, ou outillage. Sur la Figure telle que représentée, la partie mâle 26 est de forme tronconique et sa paroi externe détermine alors la forme interne de la pièce à réaliser. Il s'agit bien évidemment d'un exemple. D'autres formes de pièce, plus complexes, sont susceptibles d'être réalisées grâce à l'ensemble de thermoformage selon l'invention.

En outre, et selon une caractéristique de l'invention, la partie inférieure 20 de moule présente des tiges rétractables 28 montées verticalement autour de la partie mâle 26. Chacune des tiges rétractables 28 présente une extrémité libre 30 formée en pointe. Toutefois, selon d'autres modes de mise en œuvre, les tiges peuvent présenter une extrémité arrondie, moletée ou encore plate. Aussi, les tiges 28 représentées sur la Figure au nombre de quatre, peuvent être installées en plus grand nombre en fonction de la pièce à réaliser et de son étendue.

Sur la Figure 2, la partie inférieure 20 du moule de thermoformage est libre vis-à-vis d'une partie supérieure que l'on décrira ci-après. Aussi, les tiges rétractables 28 s'étendent en saillie de la partie inférieure 20 et plus précisément en saillie de l'embase 24 autour de la partie mâle 26. De la sorte, les extrémités libres 30 des tiges 28 définissent un plan moyen de réception Pm qui vient affleurer le sommet 32, ici plat, de la partie mâle 26. Le plan moyen de réception Pm est ainsi orienté sensiblement horizontalement.

Aussi, le préhenseur 19 va venir déposer précisément et dans une position prédéfinie la préforme 10 ramollie sur les extrémités libres 30 des tiges 28 et le sommet 32 de la partie mâle 26. Il la libère ensuite, en actionnant les jeux d'aiguilles 22, comme l'illustre la Figure 3.

Aussi, sur cette Figure 3 la préforme 10 repose sensiblement à plat sans autre artifice, sur les extrémités libres 30 des tiges 28 et le sommet 32. Car en effet, les tiges 28 sont suffisamment rapprochées les unes des autres pour que les points d'appui que constituent les extrémités libres 30 puissent supporter la préforme à plat. Compte tenu de l'état ductile de la préforme 10, un bâillement sensible peut apparaître entre deux extrémités libres 30 contiguës, sans pour autant compromettre le thermoformage.

Préférentiellement, on veillera à ce que les tiges soient suffisamment longues pour que les extrémités libres 30 de ces tiges définissent un plan moyen Pm sensiblement horizontale venant tangenter l'extremum de la partie mâle 26.

En outre, grâce aux extrémités libres 30 en pointe, lesquelles tendent à pénétrer sensiblement dans la préforme 10, le mouvement intempestif de celle-ci selon son propre plan est évité. De surcroît, grâce aux extrémités libres 30 en pointe, la préforme 10 offre une faible surface de contact et par conséquent, une plus faible déperdition d'énergie thermique. Le polymère thermoplastique qui la compose est alors toujours à l'état ramolli et par conséquent ductile.

Ainsi, les tiges 28 sont internes au moule de thermoformage et permettent ainsi de venir supporter la préforme 10 depuis l'intérieur du moule.

À partir de l'étape de dépose de la préforme 10 illustrée sur la Figure 3, le préhenseur 19 est écarté latéralement et la partie supérieure de moule 34 retenue au droit de la partie inférieure 20 est abaissée. La partie supérieure de moule 34 présente à l'intérieur, une partie femelle ou empreinte 36, complémentaire de la partie mâle 26, et qui déterminera les contours de la surface externe de la pièce à réaliser grâce à sa paroi interne 35. Cette complémentarité de forme entre la partie femelle 36 et la partie mâle 26 est ainsi prédéfinie en fonction de ladite pièce.

Comme l'illustre la Figure 4, à mesure que la partie supérieure de moule 34 s'abaisse, et que la partie mâle 26 pénètre à l'intérieur de la partie femelle 36, les tiges 28 se rétractent verticalement dans l'épaisseur de l'embase 24 de manière à s'escamoter. La rétraction des tiges 28 peut résulter de l'unique abaissement de la partie supérieure de moule 34 qui vient en butée contre leur extrémité libre 30 en venant pincer la préforme 10, entre les deux, les tiges 28 étant montées sur des moyens de rappel élastiques internes à l'embase 24, ou bien cet abaissement est commandé, par exemple hydrauliquement. Ce dernier mode de mise en œuvre est préféré pour ne pas venir endommager localement la préforme 10.

Aussi, parallèlement, la préforme 10 vient se poser selon une direction sensiblement verticale sur la partie mâle 26 et en l'espèce sur ses flancs. Partant, à mesure que les extrémités libres 30 des tiges 28 libèrent la préforme 10 encore ductile, la paroi interne 35 de la partie femelle 36 de la partie supérieure de moule 34 vient en contact avec la préforme 10, cette dernière venant également s'appliquer plus complètement contre la partie mâle 26. Partant, l'ajustement de la préforme 10 entre les deux parties de moule 20, 34 est parfaitement contrôlé.

En fin de course, et tel qu'illustré sur la Figure 5, la partie supérieure de moule 34 est abaissée à son niveau minimal tandis que la préforme 10 est prise en sandwich entre la paroi externe de la partie mâle 26 et la paroi interne 35 de la partie femelle 36, tandis que les tiges 28 sont entièrement rétractées dans l'épaisseur de l'embase 24 de la partie inférieure de moule 20.

La préforme 10 est ainsi conformée en relief. Aussi, dans cette ultime phase représentée sur la Figure 5, les deux parties de moule 20, 34 sont alors refroidies de manière à pouvoir ramener la température du polymère thermoplastique en dessous de sa température de transition vitreuse pour qu'il retrouve sa rigidité. Dès qu'il l'a retrouvée, la partie supérieure de moule 34 est relevée et la pièce rigide ainsi formée est retirée.

Ainsi, grâce aux tiges 28 qui permettent de supporter à plat la préforme 10 avant que les deux parties de moule 20, 34 ne s'engagent l'une dans l'autre et aussi de la supporter partiellement durant l'engagement des deux parties de moule, on maintient depuis l'intérieur du moule la préforme 10 sans avoir besoin de la maintenir depuis l'extérieur. Partant, il n'est nul besoin de prévoir des bordures supplémentaires à la préforme 10 pour pouvoir la maintenir depuis l'extérieur. Une économie de matière est ainsi réalisée. Au surplus, il n'est nul besoin de prévoir un temps supplémentaire pour venir découper cette bordure supplémentaire après thermoformage.

Ainsi, la méthode de mise en œuvre de l'ensemble de thermoformage selon l'invention se déroule en une succession d'étapes selon lesquelles :
- on fournit une partie de moule inférieure et une partie de moule supérieure ;
- on fournit une préforme de composite thermoplastique ;
- on fournit de l'énergie thermique à ladite préforme pour la ramollir ;
- on porte ladite préforme ramollie au-dessus de ladite partie inférieure de moule, et on vient supporter par point et par le dessous ladite préforme au-dessus de ladite partie inférieure de moule ;
- on abaisse ladite partie supérieure de moule pour engager les deux parties de moule l'une dans l'autre, tandis qu'on cesse de supporter par point progressivement ladite préforme.

De la sorte, grâce à l'ensemble de thermoformage conforme à l'invention et à sa méthode de mise en œuvre, on réalise des pièces en composite thermoplastique à des coûts avantageux.

## Revendications

1. Ensemble de thermoformage pour former en relief des matériaux thermoplastiques en plaque, ledit ensemble comprenant une partie de moule inférieure (20) et une partie de moule supérieure (34), les deux parties de moule étant mobiles en translation l'une par rapport à l'autre selon une direction sensiblement verticale entre une position ouverte où lesdites deux parties de moule (20, 34) sont écartées l'une de l'autre et une position fermée où lesdites deux parties de moule sont engagées l'une dans l'autre, ledit ensemble comprenant en outre des organes de maintien (28) pour pouvoir maintenir une plaque de matériau thermoplastique ramolli (10), selon un plan moyen Pm sensiblement horizontal entre lesdites deux parties de moule ;
**caractérisé en ce que** lesdits organes de maintien comprennent une pluralité de tiges (28) montées mobiles dans ladite partie de moule inférieure (20), et **en ce que** lesdites tiges (28) viennent s'étendre en saillie de ladite partie de moule inférieure (20), lorsque lesdites deux parties de moule (20, 34) sont dans ladite position ouverte, pour pouvoir maintenir ladite plaque de matériau thermoplastique ramolli (10) selon ledit plan moyen Pm sensiblement horizontal.

2. Ensemble de thermoformage selon la revendication 1, **caractérisé en ce que** les tiges (28) de ladite pluralité de tiges (28) sont sensiblement régulièrement espacées les unes des autres dans ladite partie de moule inférieure (20).

3. Ensemble de thermoformage selon la revendication 1 ou 2, **caractérisé en ce que** lesdites tiges (28) mobiles s'étendent sensiblement verticalement de ladite partie de moule inférieure (20).

4. Ensemble de thermoformage selon l'une quelconque des revendications 1 à 3, **caractérisé en ce que** lesdites tiges (28) mobiles se rétractent lorsque lesdites deux parties de moule (20, 34) s'engagent l'une dans l'autre.

5. Ensemble de thermoformage selon l'une quelconque des revendications 1 à 4, **caractérisé en ce que** lesdites tiges (28) mobiles présentent chacune une extrémité libre (30), et **en ce que** lesdites extrémités libres (30) desdites tiges mobiles définissent un plan moyen de réception lorsque lesdites tiges mobiles s'étendent en saillie de ladite partie de moule inférieure (20).

6. Ensemble de thermoformage selon la revendication 5, **caractérisé en ce que** lesdites extrémités libres (30) desdites tiges (28) mobiles sont formées en pointe.

7. Ensemble de thermoformage selon l'une quelconque des revendications 1 à 6, **caractérisé en ce que** ladite partie de moule inférieure (20) présente une embase (24) et une partie mâle (26) s'étendant en saillie de ladite embase (24).

8. Ensemble de thermoformage selon la revendication 7 et 5 ou 6, **caractérisé en ce que** lesdites extrémités libres (30) desdites tiges mobiles définissent un plan moyen de réception s'étendant au-dessus de ladite partie mâle (26).

9. Ensemble de thermoformage selon la revendication 7 ou 8, **caractérisé en ce que** ladite partie de moule supérieure (34) présente une empreinte (36), et **en ce que** ladite partie mâle (26) est destinée à venir s'étendre à l'intérieur de ladite empreinte (36) lorsque lesdites deux parties de moule (20, 34) s'engagent l'une dans l'autre.

10. Ensemble de thermoformage selon l'une quelconque des revendications 1 à 9, **caractérisé en ce qu'**elle comprend en outre un dispositif de chauffage (18) de ladite plaque de matériau thermoplastique (10), situé près desdites deux parties de moule (20, 34).

11. Ensemble de thermoformage selon l'une quelconque des revendications 1 à 10, **caractérisé en ce qu'**elle comprend en outre des préhenseurs (19) pour pouvoir transférer ladite plaque de matériau thermoplastique (10) ramolli dudit dispositif de chauffage (18) vers lesdites deux parties de moule (20, 34).

12. Ensemble de thermoformage selon la revendication 11, **caractérisé en ce que** lesdits préhenseurs (19) comprennent des aiguilles (22).

## Patentansprüche

1. Eine Thermoform-Anordnung zum Reliefformen von thermoplastischen plattenförmigen Materialien, wobei die genannte Anordnung ein unteres Formteil (20) und ein oberes Formteil (34) aufweist, wobei die beiden Formteile relativ zueinander in einer im Wesentlichen vertikalen Richtung zwischen einer offenen Position, in der die genannten beiden Formteile (20, 34) voneinander beabstandet sind, und einer geschlossenen Position, in der die genannten beiden Formteile ineinander eingreifen, translationsbeweglich sind, wobei die genannte Anordnung ferner Halteelemente (28) umfasst, um eine Platte aus erweichtem thermoplastischen Material (10) in einer im Wesentlichen horizontalen Mittelebene Pm zwischen den genannten beiden Formteilen halten zu können;
**dadurch gekennzeichnet, dass** die genannten Halteelemente eine Vielzahl von Stangen (28) umfassen, die beweglich im genannten unteren Formteil (20) montiert sind, und **dadurch, dass** sich die genannten Stangen (28) vom genannten unteren Formteil (20) vorspringend erstrecken, wenn sich die genannten beiden Formteile (20, 34) in der offenen Position befinden, um in der Lage zu sein, die genannte Platte (10) aus erweichtem thermoplastischen Material in der genannten im Wesentlichen horizontalen Mittelebene Pm zu halten.

2. Die Thermoform-Anordnung nach Anspruch 1, **dadurch gekennzeichnet, dass** die Stäbe (28) der genannten Vielzahl von Stäben (28) im genannten unteren Formteil (20) im Wesentlichen gleichmäßig voneinander beabstandet sind.

3. Die Thermoform-Anordnung nach Anspruch 1 oder 2, **dadurch gekennzeichnet, dass** sich die genannten beweglichen Stäbe (28) im Wesentlichen vom genannten unteren Formteil (20) aus vertikal erstrecken.

4. Die Thermoform-Anordnung nach irgendeinem der Ansprüche von 1 bis 3, **dadurch gekennzeichnet, dass** sich die genannten beweglichen Stangen (28) zurückziehen, wenn die genannten beiden Formteile (20, 34) ineinander eingreifen.

5. Die Thermoform-Anordnung nach irgendeinem der Ansprüche von 1 bis 4, **dadurch gekennzeichnet, dass** die genannten beweglichen Stangen (28) jeweils ein freies Ende (30) aufweisen, und **dadurch, dass** die genannten freien Enden (30) der genannten beweglichen Stangen eine mittlere Aufnahmeebene definieren, wenn sich die genannten beweglichen Stangen aus dem genannten unteren Formteil (20) vorspringend erstrecken.

6. Die Thermoform-Anordnung nach Anspruch 5, **dadurch gekennzeichnet, dass** die genannten freien Enden (30) der genannten beweglichen Stäbe (28) spitz ausgebildet sind.

7. Die Thermoform-Anordnung nach irgendeinem der Ansprüche von 1 bis 6, **dadurch gekennzeichnet, dass** der genannte untere Formabschnitt (20) eine Basis (24) und ein von der genannten Basis (24) vorstehendes männliches Teil (26) aufweist.

8. Die Thermoform-Anordnung nach den Ansprüchen 7 und 5 oder 6, **dadurch gekennzeichnet, dass** die genannten freien Enden (30) der genannten beweglichen Stäbe eine mittlere Aufnahmeebene definieren, die sich über das männliche Teil (26) erstreckt.

9. Die Thermoform-Anordnung nach Anspruch 7 oder 8, **dadurch gekennzeichnet, dass** das genannte obere Formteil (34) einen Hohlraum (*empreinte*) (36) aufweist, und **dadurch, dass** das männliche Teil (26) dazu bestimmt ist, sich in den Hohlraum (36) zu erstrecken, wenn die beiden Formteile (20, 34) ineinander eingreifen.

10. Die Thermoform-Anordnung nach irgendeinem der Ansprüche von 1 bis 9, **dadurch gekennzeichnet, dass** sie ferner eine Heizvorrichtung (18) zum Erwärmen der genannten Platte aus thermoplastischem Material (10) aufweist, die in der Nähe der genannten beiden Formteile (20, 34) angeordnet ist.

11. Die Thermoform-Anordnung nach irgendeinem der Ansprüche von 1 bis 10, **dadurch gekennzeichnet, dass** sie ferner Greifer (19) umfasst, um die genannte erweichte Platte aus thermoplastischem Material (10) von der genannten Heizvorrichtung (18) zu den genannten beiden Formteilen (20, 34) übertragen zu können.

12. Die Thermoform-Anordnung nach Anspruch 11, **dadurch gekennzeichnet, dass** die genannten Greifer (19) Nadeln (22) umfassen.

## Claims

1. A thermoforming assembly for relief forming of plate of thermoplastic materials, said assembly comprising a lower mold part (20) and an upper mold part (34), the two mold parts being movable in translation the one to the other along a substantially vertical direction between an opened position where said two mold parts (20, 34) are spaced apart the one to the other and a closed position where said two mold parts are engaged the one into the other, said assembly further comprising holding members (28) to be able to hold a softened thermoplastic material plate (10), along a substantially horizontal middle plan Pm between said two mold parts ;
**characterized in that** said holding members comprise a plurality of rods (28) movably mounted into said lower mold part (20), and **in that** said rods (28) protrude from said lower mold part (20), when said two mold parts (20, 34) are in said opened position, to be able to hold said softened thermoplastic material plate (10) along said substantially horizontal middle plan Pm.

2. The thermoforming assembly according to claim 1, **characterized in that** the rods (28) of said plurality of rods (28) are substantially regularly spaced to each other in said lower mold part (20).

3. The thermoforming assembly according to claim 1 or 2, **characterized in that** said movable rods (28) extend substantially vertically from said lower mold part (20).

4. The thermoforming assembly according to any of claims 1 to 3, **characterized in that** said movable rods (28) retract when said two mold parts (20, 34) engage the one into the other.

5. The thermoforming assembly according to any of claims 1 to 4, **characterized in that** said movable rods (28) present each one a free end (30), and **in that** said free ends (30) of said movable rods define a receiving middle plan when said movable rods protrude from said lower mold part (20).

6. The thermoforming assembly according to claim 5, **characterized in that** said free ends (30) of said movable rods (28) are tip-like formed.

7. The thermoforming assembly according to any of claims 1 to 6, **characterized in that** said lower mold part (20) has a base plate (24) and a male part (26) protrude from said base plate (24).

8. The thermoforming assembly according to claims 7 and 5 or 6, **characterized in that** said free ends (30) of said movable rods define a receiving middle plan extending above said male part (26).

9. The thermoforming assembly according to claims 7 or 8, **characterized in that** said upper mold part (34) has an imprint (36), and **in that** said male part (26) is intended to extend within said imprint (36) when said two mold parts (20, 34) are engaged the one into the other.

10. The thermoforming assembly according to any of claims 1 to 9, **characterized in that** it further comprises a device (18) for heating said thermoplastic material plate (10), located closely to said two mold parts (20, 34).

11. The thermoforming assembly according to any of claims 1 to 10, **characterized in that** it further comprises grippers (19) to be able to transfer said softened thermoplastic material plate (10) from said heating device (18) towards said two mold parts (20, 34).

12. The thermoforming assembly according to claim 11, **characterized in that** said grippers (19) comprise needles (22).
